# EUROPEAN PATENT APPLICATION

(11) **EP 3 005 869 A1**
(43) Date of publication of application: **13.04.2016**
(21) Application number: 13886237.0
(22) Date of filing: 27.11.2013
(51) Int. Cl.: A01K 67/00, A01K 1/03

(54) **ANIMAL RESEARCH APPARATUS**

(30) Priority: 04.06.2013 JP 2013118178
(71) Applicant: Riken, Wako-shi, Saitama 351-0198 (JP)
(72) Inventor: IRIKI, Atsushi, Wako-shi Saitama 351-0198 (JP); YAMAZAKI, Yumiko, Wako-shi Saitama 351-0198 (JP); AARON, Bramson, Wako-shi Saitama 351-0198 (JP)
(74) Representative: Klingseisen, Franz
(86) International application number: PCT/JP2013/006954
(87) International publication number: WO 2014/195997

(57) **Abstract**

An animal test device that can automatically optimize the tests performed for animal testing.

An animal test device 1 for performing behavior tests of a test animal A includes a cage 2 used as a living environment for a test animal A; a modular chamber 3 incident to the cage 2; a touch panel 33 located in the chamber 3, that presents tasks to a test animal A, detects responses from the test animal A, and obtains response data; a position measurement device 4 that measures the position of a test animal A in the cage 2 and the chamber 3 and obtains position data; a data storage unit 55 that stores the response data and the position data as test data; and a task improvement unit 511e that improves the task presented by the touch panel 33, based on the test data.

## Description

### Technical Field

The present invention relates to an animal test device that collects test data of test animals such as primates and analyzes the test data.

### Background Art

When studying the influence that brain functions, diseases, and genes have on behavior using test animals such as primates and mice, an animal test is performed under a predetermined test environment and obtained test data is collected and analyzed.

An animal test device used for animal testing that includes a cage operating as a living environment for test animals, multiple chambers attached to the cage, test units in the chambers performing a test by presenting a task to the test animal and detecting the response of the test animal to the task, and a data storage unit for storing response data of the test animal detected by the test units as a test result, as described in Non Patent Literature 1, for example.

Details of the test system, such as the content of the task and the presentation method thereof, are previously set by the tester performing the test. For example, a touch panel is prepared as the test unit, an image representing the task is projected on the touch panel, and a position on the image which the test animal has touched after having seen the image is stored as test data in the data storage unit.

Furthermore, the test data stored in the data storage unit is analyzed by the tester using a predetermined method in order to study the test animal.

### Citation List

### Non Patent Literature

Non Patent Literature 1: NewBehavior company, company's homepage, company's product IntelliCage introduction page, [online], [May 27, 2013 search], Internet URL:http://www.newbehavior.com/products/ic

### Summary of Invention

### Technical Problem

According to the related art described above the test data of the test animal obtained by the animal test device needs to be analyzed directly by the tester himself. For this reason, a long time is necessary for analysis. In addition, when the amount of test data is extremely large, the analysis itself becomes difficult.

In addition, the test may be optimized by the test unit according to the progress of the animal test using the animal test device. That is, when a better test method is discovered according to the progress of the animal test, the optimization of the test may be performed using this knowledge.

However, with the animal test device described in the related art above, the tester must examine the enormous test data set directly to optimize the test and therefore a great deal of labor is required. For this reason, an animal test device that can automatically perform the optimization of the test is necessary.

In addition, the tester needs to propose new hypotheses about the test animal, based on the obtained test data, and verify the hypotheses; and much labor is necessary for achieving this. For this reason, an animal test device that can automatically propose and verify new hypotheses is necessary.

Accordingly, the present invention has been made in view of the above problems and an object of the present invention is to provide an animal test device that can automatically perform optimization of a test performed at the time of animal testing.

Further, one objective of the present invention is to provide an animal test device that can automatically propose and verify a new hypothesis, in addition to the test optimization.

Another objective of the present invention is to provide an animal test device that can automatically analyze test data, in addition to test optimization and proposing and verifying new hypotheses.

### Solution to Problem

The first aspect of the present invention is an animal test device for performing behavior tests on a test animal that includes: a cage operating as a living environment for the test animal; modular chambers into which the test animal is capable of entering and exiting; a testing unit located in the chambers, the presentation of a task to the test animal having entered a chamber, the detection of a response from the test animal to the task, and the collection of response data; a position measurement device that measures the position of a test animal in the cage or in the chamber and obtains the position data from the test animal; a data storage unit that stores the response data and the position data as test data; and a task improvement unit that improves the task presented by the test unit, based on the test data.

The second aspect of the present invention is an animal test device with multiple chambers that can be attached to the main cage, each capable of presenting a different task in relation to the animal test device described in the first aspect.

The third aspect of the present invention is an animal test device that includes a task proposal unit which proposes a hypothesis about the behavior of the test animal, based on the analysis result, in relation to the first and second aspects of the animal test device.

The forth aspect of the present invention is an animal test device that includes a data analysis unit which obtains results from the behavior tests and analyzes the test data, in relation to the first through third aspects of the animal test device.

The fifth aspect of the present invention is an animal test device that analyzes the test data according to the fourth aspect using a hidden Markov model.

The sixth aspect of the present invention is an animal test device according to aspects one through five including a test unit with a touch panel in the animal test device.

The seventh aspect of the present invention is an animal test device according to the first through sixth aspects including a cage that includes feeding, water supply, and cleaning functions.

### Advantageous Effects of Invention

According to the first to seventh aspects of this invention having the above configurations, real-time optimization of an animal test can be automatically performed.

In addition, according to the third to seventh aspects having the above configurations, new hypothesis proposition and verification can be automatically performed.

In addition, according to the fourth to seventh aspects having the above configurations, analysis of test data can be automatically performed.

### Brief Description of Drawings

Fig. 1 is a perspective view illustrating an entire animal test device according to an embodiment of the present invention.
Fig. 2 is a perspective view illustrating a cage for the animal test device.
Fig. 3 is a perspective view illustrating a chamber for the animal test device.
Fig. 4 is a plan view illustrating a touch panel located in the chamber.
Fig. 5 is a configuration block diagram illustrating a control device for the animal test device.
Fig. 6 is a functional block diagram of a control unit of the control device.
Fig. 7 is a flowchart illustrating an animal test method executed by the animal test device according to the embodiment of the present invention.

### Description of Embodiments

Hereinafter, an animal test device according to an embodiment of the present invention will be described in detail.

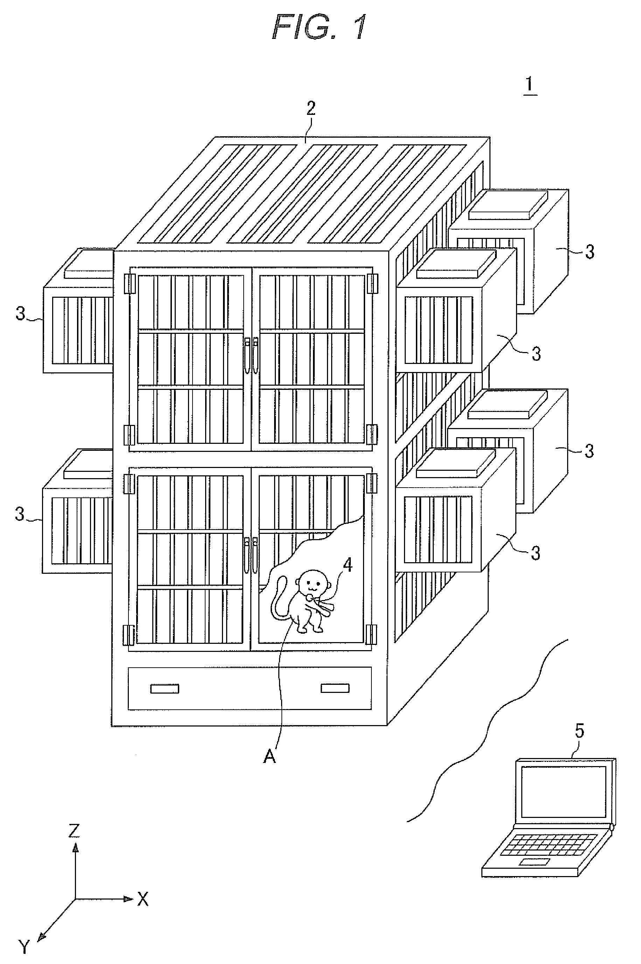

Fig. 1 is a perspective view illustrating an entire animal test device according to one embodiment of the present invention. An animal test device 1 includes a cage 2, eight chambers 3 that are attached to the cage 2, a position measurement device 4 that is attached to test animal A, and a control device 5 that wholly controls the animal test device 1.

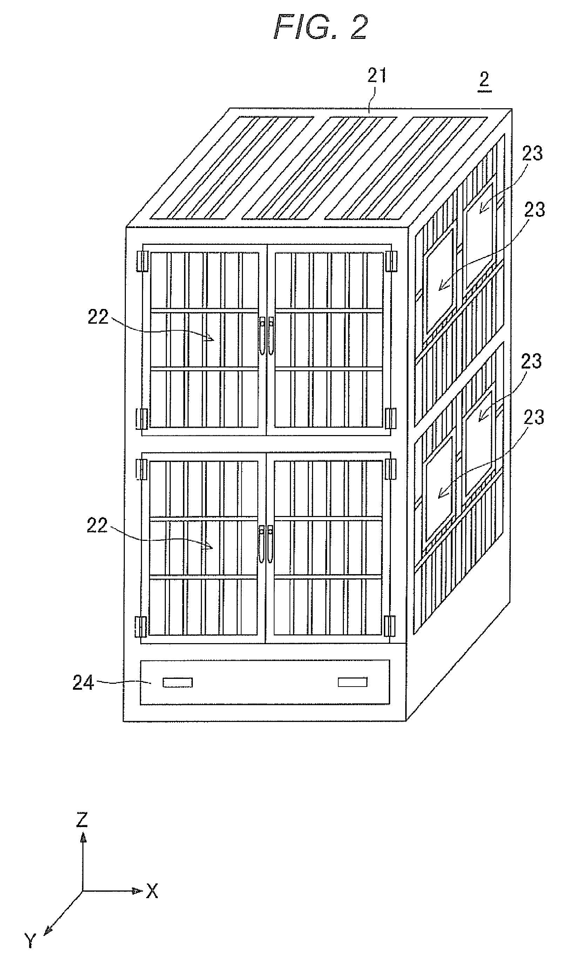

Fig. 2 is a perspective view illustrating the cage 2 of the animal test device 1 of Fig. 1. The cage 2 is a cage-like structure that serves as a living space for the test animal A. Doors 22 on upper and lower levels that can be opened/closed are provided on the front (+Y direction of Fig. 2) of the cage body 21 and four openings 23 are provided on each of the left and right lateral surfaces (±X direction of Fig. 2), that is, a total of eight openings 23 are provided. In addition, a tray 24 that can be inserted/extracted in a ±Y direction is provided at the lower portion of the cage 2.

In the cage body 21, the four lateral surfaces (front, rear, right, and left sides) and the top surface have a lattice configuration for ventilation of the cage body 21 and to enable external viewing of the test animal A such as primates in the cage body 21. In addition, the cage body 21 uses a lattice structure so that the test animal A may easily move throughout the cage body 21. The number of test animals A accommodated in the cage body 21 can be adjusted according to types of tests.

A pair of doors 22 is provided on both the upper and lower level (in the Z direction) of the cage body 21 and can be opened side-by-side via rotation around the Z axis. Entrance and exit of the test animal A into and out of the cage body 21 as well as various operations for the inner portion of the cage body 21 are performed mainly when the doors 22 are opened.

The four openings 23 are provided on each side of the cage body 21 with a total of eight openings. The chamber 3 is attached to the opening 23 by means of any fixing mechanism not illustrated in the drawings. In this embodiment, eight openings 23 are provided; however, for the present invention, the number of openings is can be increased/decreased according to the type of the tests and the number of test animals A.

The tray 24, which can be inserted/extracted in a ±Y direction, with respect to the cage body 21, is provided with a cleaning mechanism (not illustrated in the drawings) that provides a cleaning function for the excrement of the test animal A dropped to the lower portion of the cage body 21.

In addition, the tray 24 is equipped with a feeding mechanism for feeding the test animal A and a water supply mechanism to provide drinking water. Equipping the tray 24 with these functions allows the tests of the test animal A accommodated in the cage body 21 to be performed over a long period without the manual intervention of a person during observation, thus reducing stress during the test of the test animal A and thus collecting test data in which artificial influences are minimized. The feeding mechanism and the water supply mechanism may be provided on an internal surface of the cage body 21 or other location rather than in the tray 24. In this case, the tray 24 has only the cleaning mechanism.

When the tray 24 is extracted in a +Y direction, the tray 24 is exposed to the outside of the cage body 21. Therefore a worker can perform maintenance work such as cleaning.

In addition, each mechanism built into the tray 24 is connected to the control device 5. Even when the feeding mechanism and the water supply mechanism are not provided in the tray 24, these mechanisms are connected to the control device 5.

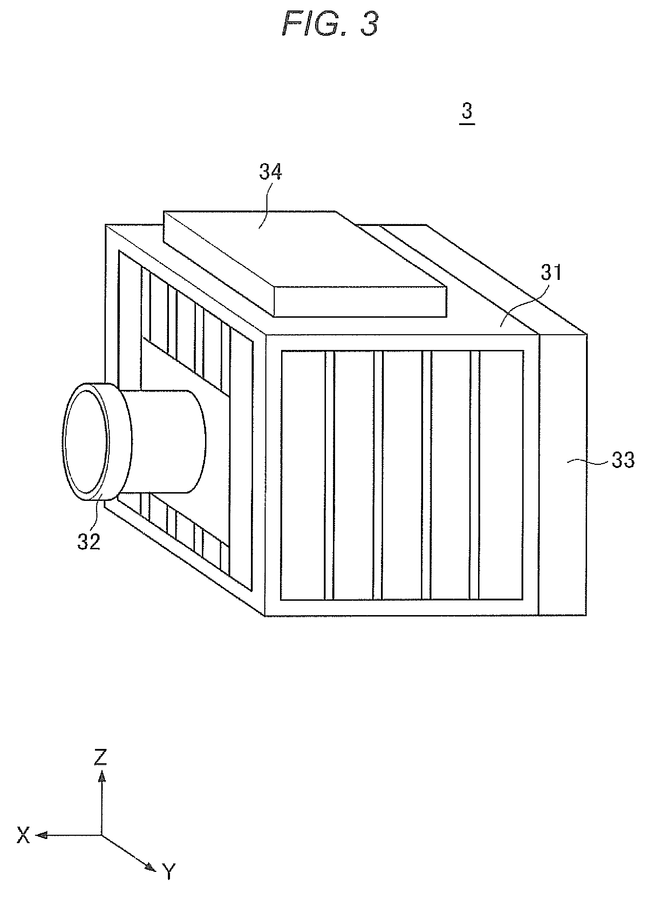

Fig. 3 is a perspective view illustrating the chamber 3 of the animal test device 1 of Fig. 1. The chamber 3 has a cage-like shape and can be attached to the opening 23 of the cage body 21.

The chamber 3 includes a chamber body 31, an entrance 32 on the lateral surface positioned in a +X direction of the chamber body 31, a touch panel 33 attached to an opening surface positioned in a -X direction of the chamber body 31, and a controller 34 that performs control of the chamber 3 and data collection.

In the chamber body 31, the lateral surface in the -X direction in Fig. 3 has an opening, all of the other lateral surfaces have a cage-like lattice, and the top bottom surfaces are flat. In addition, a feeding mechanism and an air injection mechanism not illustrated in the drawings are provided in the chamber body 31. Both the feeding mechanism and the air injection mechanism are connected to the controller 34.

A tabular entrance 32 is provided in the +X direction of the chamber body 31 as an entrance/exit of the test animal A to/from the inner portion of the chamber body 31. The entrance 32 is provided with a sensor and an opening/closing mechanism not illustrated in the drawings. The sensor and the opening/closing mechanism are connected to the controller 34 to be described later.

The touch panel 33 functions as a test unit that provides a task to perform for the test animal A having entered the inner portion of the chamber body 31, detects a response of the test animal to the task, and collects the test data. A tablet-type information processing terminal capable of executing various information processing is preferably used as the touch panel 33. The touch panel 33 is connected to the controller 34. An imaging mechanism such as a video camera may be incorporated into the touch panel 33, an image of the test animal A in the chamber 3 may be captured, and the image of the test animal A may be reflected in the touch panel 33 provided other chambers 3. In this way, because the test animals A accommodated in different chambers 3 can see the mutual images, a test for communication between the test animals A can be performed.

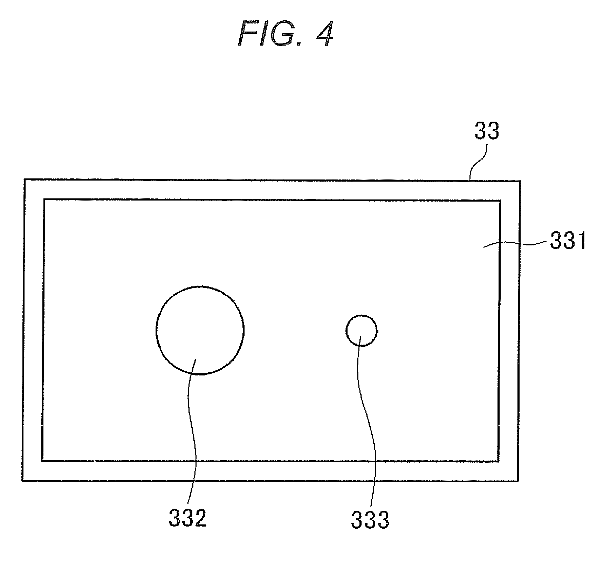

Fig. 4 is a plan view illustrating the touch panel 33 provided in the chamber 3. Various images are displayed as tasks for the test animal A on a screen 331 of the touch panel 33 and operation information of the image 331 by the test animal A is obtained as test data.

In an example illustrated in Fig. 4, a large circle 332 and a small circle 333 are displayed as a tasks on the screen 331. By using this task, tests for the object size determination ability and the memory ability of the test animal A can be performed.

In the test, the test animal A sees the large circle 332 or the small circle 333 displayed on the screen 311, determines the sizes of the circles, and contacts one of the circles.

The test animal A responds to the task by touching the screen and the response result is transmitted as response data to the control device 5, to be used for various analyses, is also transmitted to the controller 34, and is used for giving a reward or punishment to the test animal A.

In this embodiment, the large circle 332 and the small circle 333 are displayed as the tasks presented to the test animal A on the screen 331. However, the present invention is not limited thereto and other tasks may be displayed.

For example, images of multiple shapes such as a circle, a rectangle, and a star may be displayed as the tasks on the screen 311 and a response of the test animal A at that time may be detected. By using such tasks, tests for the figure discrimination ability and the memory ability of the test animal A can be performed.

In addition, multiple images that vary by color instead of shape may be displayed for certain tasks on the screen 311 and the response of the test animal A at that time may be detected. By using such tasks, tests for color discrimination ability and memory ability of the test animal A can be performed.

In addition, images of living things such as animals and insects or plants such as fruits and trees may be displayed as the tasks on the screen 311 and the response of the test animal A at that time may be detected. By using these tasks, tests for the target classification ability and the concept formulation ability of the test animal A can be performed.

In addition, images or videos of other test animals A captured by the touch panels device33 provided in other chambers 3 may be displayed as the tasks and the response of the test animals A at that time may be detected. By using the tasks, tests for the social recognition ability of the test animals A can be performed.

The controller 34 controls the opening/closing mechanism of the entrance 32 and also controls giving a reward or punishment to the test animal A according to a test result, performed in the chamber 3.

Specifically, if the sensor provided at the entrance 32 detects that a test animal A is trying to enter the chamber through the entrance 32, a signal is transmitted from the sensor to the controller 34. The controller 34 then executes the drive control of the opening/closing mechanism of the entrance 32 based on the signal. The drive control is executed such that only one test animal A can be located in the chamber body 31 at once. In this way, the incoming and outgoing timing and the population of the test animal A which goes in and out of the chamber body 31 can be adjusted.

In addition, the controller 34 provides food as a reward to the test animal A through the feeding mechanism or uses injected air as a punishment to the test animal A through the air injection mechanism, according to the response result obtained when the test animal A touches the touch panel 33. For example, on the screen 311 illustrated in Fig. 4, if the test animal touches the large circle 332, food is given as reward and if the test animal touches the small circle 333, the air is injected as punishment.

The position measurement device 4 is attached to the test animal A and the device measures the position of the test animal A. The position measurement device 4 is a device that measures the position of the test animal A using global positioning system (GPS), ultra wide band (UWB) wireless communication or other technologies. Position information from the test animal A measured by the position measurement device 4 is transmitted as position data to the control device 5 either directly from the position measurement device 4 or via the controller 34. An imaging mechanism such as a video camera or other devises may be used as the position measurement device 4 in the cage 2, an image captured by the imaging mechanism may be analyzed, and the position information of the test animal A may be acquired.

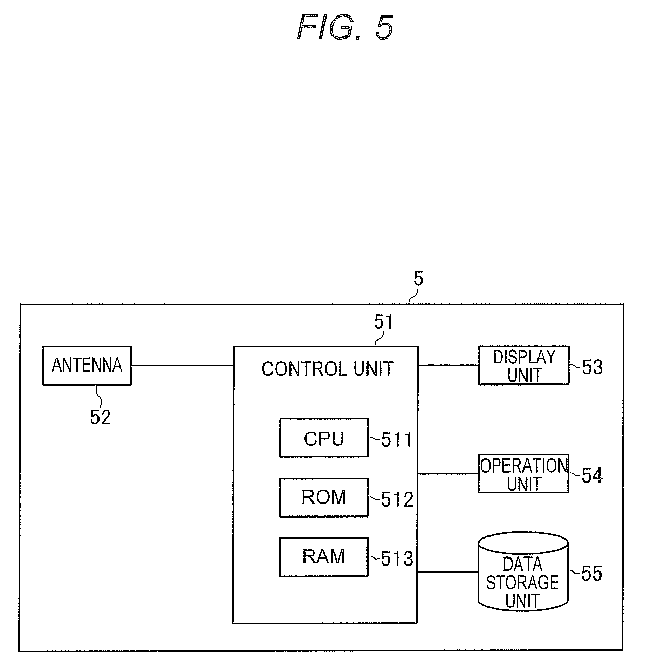

The control device 5 executes control over each component of the animal test device 1. Fig. 5 is a configuration block diagram illustrating the control device 5 of the animal test device 1. The control device 5 includes a control unit 51, an antenna 52, a display unit 53, an operation unit 54, and a data storage unit 55.

The control unit 51 includes a CPU 511 that wholly controls the control unit 51, a ROM 512 that stores a control program operating on the CPU 511, and a RAM 513 that temporarily stores various data.

The antenna 52 is an antenna to perform transmission/reception of information of the individual configurations of the animal test device 1, specifically, the touch panel 33 and the position measurement device 4 and so on, that is, transmission/reception of test data, namely response data and position data. In addition, when a biological reaction measurement mechanism such as an electroencephalography device and an electrocardiogram device is attached to the test animal A, the antenna 52 is also used for transmission/reception of data obtained by the biological reaction measurement mechanism.

The display 53 is a configuration to display a setting situation of the control device 5, test data collected by the control device 5, and content of a proposed hypothesis and so on.

The operation unit 54 is a configuration to allow an operator to perform various operations such as setting to the control device 5 and a change thereof and corresponds to a keyboard.

The data storage unit 55 stores the position data of the test animal A measured by the position measurement device 4 and the response data obtained by the touch panel 33 as test data. In addition, the data storage unit 55 stores task data that is used in the touch panel 33.

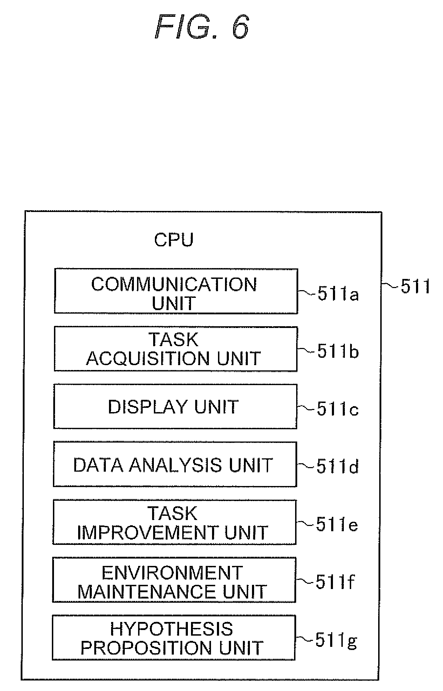

Fig. 6 is a functional block diagram of the control unit 51 of the control device 5. The CPU 511 processes control programs stored in the ROM 512 on the RAM 513 and executes the control programs, so that the control unit 51 functions as a communication unit 511 a, a task acquisition unit 511b, a display unit 511c, a data analysis unit 511d, a task improvement unit 511 e, an environment maintenance unit 511 f, and a hypothesis proposition unit 511 g.

The communication unit 511a performs transmission/reception of information with the touch panel 33 and the position measurement device 4 via the antenna 52. The response data received from the touch panel 33 and the position data received from the position measurement device 4 are stored in the data storage unit 55.

The task acquisition unit 511b reads task data stored in the data storage unit 55. The task data read by the task acquisition unit 511b is transmitted to the touch panel 33 via the antenna 52 by the communication unit 511a.

The display unit 511c presents a task to the touch panel 33.

The data analysis unit 511d analyzes the test data and performs a verification of a cognition function or the like for the test animal A. The data analysis unit 511d analyzes the test data using a hidden Markov model.

A hidden Markov model is a type of probability model and is a method of estimating an unknown parameter from observable information, on the assumption that a system is a Markov process (probability process having a property that the future behavior is determined by a current value and is unrelated to the past behavior) in which the parameter is unknown.

The task improvement unit 511e improves the task presented to the test animal A in the chamber 3, according to an analysis result by the data analysis unit 511d. Examples of improvement in the content of the task are a replacement of each task provided to the test animal A in each chamber 3, a modification of the task, and a changing in timing/amount of reward and punishment.

The environment maintenance unit 511f controls the cleaning mechanism, the feeding mechanism, and the water supply mechanism provided in the tray 24 and maintains the internal environment of the cage 2, such that the test animal A can live in a healthy state for a long period.

The hypothesis proposition unit 511g proposes a hypothesis about the cognition and the behavior of the test animal A, based on the analysis result by the data analysis unit 511d. The proposed hypothesis is provided to the task improvement unit 511e and improvement of the task is performed according to necessity.

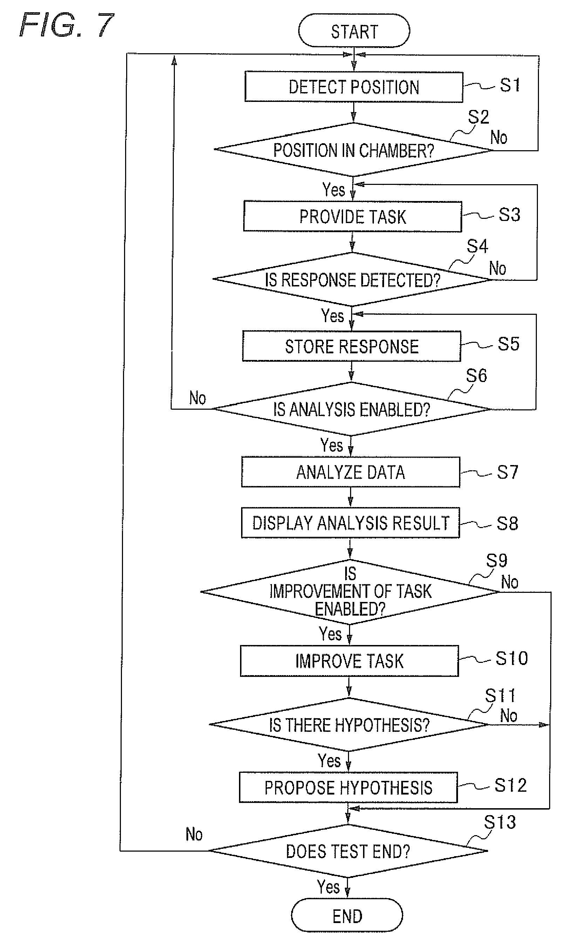

Next, an animal test that is performed by the animal test device 1 including the features described above will be described. Fig. 7 is a flowchart illustrating an animal test method executed by the animal test device according to an embodiment of the present invention.

First, detection of the position of the test animal A is performed by the position measurement device 4 attached to the test animal A (step S1). Position data of the test animal A detected at that time is transmitted from the position measurement device 4 to the control device 5 and is stored in the data storage unit 55.

When position information of the test animal A shows a position in any one of the eight chambers 3 (step S2: Yes), the display unit 511c of the control device 5 presents a predetermined task to the touch panel 33 in the chamber 3 and the task is provided to the test animal A to be performed (step S3).

When the position information of the test animal A does not show a position in the chamber 3 (step S2: No), the process returns to step S1 and the position detection of the test animal A is continuously performed.

Next, when a response of the test animal to the provided task is detected, that is, it is detected that the test animal A has touched the task displayed on the touch panel 33 (step S4: Yes), information about the response is transmitted as response data to the control device and is stored in the data storage unit 55 (step S5).

When a test animal A is located in the chamber 3, but no response is detected (step SS4: No), the process returns to step S3 and the task is continuously provided until a response is detected.

Next, when the test data in which the data analysis is enabled by the data analysis unit 511d, that is, the response data and the position data are stored in the data storage unit 55 (step S6: Yes), the test data is analyzed by the data analysis unit 511d (step S7). When an amount of the test data stored in the data storage unit is not sufficient for the data analysis unit 511d to analyze (step S6: No), the process returns to step S1 and the test data is continuously collected.

Next, an analysis result of the test data by the data analysis unit 511d is displayed on the display 54 (step S8) and the task improvement unit 511e determines whether improvement of the task is enabled or not, based on the analysis result of the test data (step S9).

When the improvement of the task is enabled (step S9: Yes), the task improvement unit 511e improves the task (step S10).

Next, the hypothesis proposition unit 511g tries to propose a new hypothesis about the test animal A, based on the analysis result of the test data by the data analysis unit 511d (step S11).

When the proposition of the new hypothesis is enabled (step S11: Yes), the hypothesis proposition unit 511g proposes the new hypothesis (step S12) and the task improvement unit 511e improves the task, based on the new hypothesis.

In addition, when all of the desired tests for the test animal A end (step S13: Yes), the tests by the animal test device 1 using the test animal A end. Meanwhile, when the desired tests do not end (step S13: No), the process returns to step S1 and a series of tests is repeated.

In addition, when the improvement of the task is disabled in step S9 (step S9: No) and when the proposition of the new hypothesis is disabled in step S11 (step S11: No), the process proceeds to step S13.

According to the animal test device 1 according to the embodiment, the analysis of the test data of the test animal A and the optimization of the test can be automatically performed in real time and the proposition and the verification of the new hypothesis can be automatically performed in real time.

In the animal test device 1 according to the embodiment, a new hypothesis is proposed by the hypothesis proposition unit 511g. However, in the present invention, the hypothesis proposition unit 511g may be omitted and hypotheses may not be proposed automatically. Even in this case, the analysis of the test data of the test animal A and the optimization of the test can be automatically performed.

In addition, in the animal test device 1 according to the embodiment, the data is analyzed by the data analysis unit 511d. However, in the present invention, the data analysis unit 511d may be omitted and the data may not be automatically analyzed. Even in this case, the proposition of a new hypothesis about the test animal A and the optimization of the test can be automatically performed.

In addition, in the animal test device 1 according to the embodiment, the touch panel 33 is used as the test unit provided in the chamber 3. However, the present invention is not limited thereto and an operation mechanism such as a lever and a button requiring a mechanical operation may be provided and changing the reward or the punishment for lever pressing or button pressing by the test animal A may be presented as the task. By using the task, a test for sensitivity of the test animal A to feedback can be performed.

In addition, a camera capturing an image or a video camera capturing a video may be provided as the test unit, a barrier may be included with food put at a position such that the test animal A cannot not reach it with the barrier there, and two sticks (long and short) may be provided, and a task in which the test animal A could draw the food using the long stick but cannot draw the feed using the short stick may be presented to the test animal A. By using the task, tests for the object length recognition ability and the tool use ability of the test animal A can be performed.

The transmission/reception of the data between the individual configurations in the animal test device 1 according to the embodiment may be performed by a wired or wireless system.

In addition, in the animal test device 1 according to the embodiment, the response data and the position data of the test animal A are collected as the test data. However, the present invention is not limited thereto. Sound data such as a cry of the test animal A may be collected using a sound collection mechanism such as a microphone, and may be stored in the data storage unit 55, and may be analyzed by the data analysis unit 511d.

In addition, in the animal test device 1 according to this embodiment, a hidden Markov model is used to analyze the test data. However, the present invention is not limited thereto and other analysis methods may be used.

### Reference Signs List

1: animal test device
2: cage
3: chamber
4: position measurement device
5: control device
21: cage body
22: door
23: opening
24: tray
31: chamber body
32: entrance
33: touch panel
34: controller
51: control unit
52: antenna
53: display unit
54: display
55: data storage unit
331: screen
332: large circle
333: small circle
511: CPU
512: ROM
513: RAM
511a: communication unit
511b: task acquisition unit
511c: display unit
511d: data analysis unit
511 e: task improvement unit
511f: environment maintenance unit
511g: hypothesis proposition unit
A: test animal

## Claims

1. An animal test device for performing behavior tests of a test comprising:
a cage used as a living environment for the test animal;
a modular chamber that the test animal is capable of entering and exiting;
a test unit provided in the chamber, presenting a task to the test animal having entered the chamber, detecting a response from the test animal to the task, and collecting response data;
a position measurement device that measures the position of the test animal in the cage and the chamber and obtains position data of the test animal;
a data storage unit that stores the response data and the position data as test data; and
a task improvement unit that improves the task presented by the test unit, based on the test data.

2. The animal test device according to claim 1, wherein multiple chambers can be attached to the cage and each of the chambers presents a different task.

3. The animal test device according to claim 1 or 2, further comprising:
a task proposition unit that proposes a hypothesis about the behavior of the test animal, based on the test data.

4. The animal test device according to any one of claims 1 to 3, further comprising:
a data analysis unit that analyzes the test data and obtains the result of the behavior test.

5. The animal test device according to claim 4, wherein the data analysis unit analyzes the test data using a hidden Markov model.

6. The animal test device according to any one of claims 1 to 5, wherein the test unit is a touch panel.

7. The animal test device according to any one of claims 1 to 6, wherein the cage includes feeding, water supply, and cleaning functions.
